# EUROPEAN PATENT APPLICATION

(11) **EP 2 346 238 A2**
(43) Date of publication of application: **20.07.2011**
(21) Application number: 11150914.7
(22) Date of filing: 14.01.2011
(51) Int. Cl.: H04N 5/00, H04N 5/76, H04N 7/24

(54) **Digital broadcasting receiver and digital broadcasting receiving method**

(30) Priority: 19.01.2010 JP 2010008746
(71) Applicant: Alpine Electronics, Inc., Tokyo (JP)
(72) Inventor: Itatsu, Takao, Fukushima (JP)
(74) Representative: Klunker . Schmitt-Nilson . Hirsch

(57) **Abstract**

A digital broadcasting receiver reads out, in response to a time-shift playback request, the recorded digital broadcast signal after a predetermined time from the recording while recording a digital broadcast signal received from a selected broadcasting station in a first storage section to execute time-shift playback (105, 106), keeps reading out the digital broadcast signal from the first storage section while recording the digital broadcast signal received from an alternative broadcasting station in a second storage section in response to worsening of a reception state during the time-shift playback (108, 109, 110), and reads out the digital broadcast signal from the second storage section after completion of reading out of the digital broadcast signal recorded in the first storage section while keeping recording the digital broadcast signal received from the alternative broadcasting station in the second storage section to continue the time-shift playback (112).

## Description

### DESCRIPTION

### BACKGROUND OF THE INVENTION

### 1. Field of the Invention

The present invention relates generally to digital broadcasting receivers and digital broadcasting receiving methods. More particularly, the present invention relates to a digital broadcasting receiver having a time-shift playback function for reading out and reproducing the digital broadcast signal recorded in the storage section after a predetermined time from the recording while recording a received digital broadcast signal in a storage section and to a digital broadcasting receiving method.

### 2. Description of the Related Art

A function for continuously receiving a service (hereinafter, referred to as a continuous service-receiving function) will be described.

European digital radio broadcasting (such as digital audio broadcasting (DAB) and digital radio mondiale (DRM)) provides a service link function. The service link function allows digital broadcasting receivers to switch a current broadcasting station to an alternative one when reception of an ensemble becomes difficult because of a weak electric field. More specifically, the service link function is implemented by an application that previously creates a list of alternative broadcasting stations using service link information multiplexed into a received ensemble and switches the current ensemble to an ensemble of an alternative broadcasting station or an analog broadcasting channel (AM/FM) in response to worsening of a reception state to allow users to continuously enjoy a service.

As a function for continuously receiving a broadcast program, digital television broadcasting provides relay-station/network-station search function. The relay stations are auxiliary broadcasting stations provided separately from a key station to extend a service area. The relay stations broadcast the same programs as the key station at different frequencies. The network stations are affiliated with a key station, such as Nippon Television Network Corporation, Fuji Television Network, Inc., Tokyo Broadcasting System Television, Inc., or TV Asahi Corporation. For example, broadcasting stations affiliated with Nippon Television Network Corporation are network stations of Nippon Television Network Corporation. The network stations are highly likely to broadcast, but not necessarily, the same programs as the key station. In the relay-station/network-station search function, a list of relay stations of each key broadcasting station is previously created using network information table (NIT) information for the key broadcasting station included in service information (SI). A list of network stations is also previously created using affiliation identifier information (affiliation-id) of broadcaster information table (BIT) information. When reception of a broadcast signal from a current broadcasting station becomes difficult, a relay station or a network station is searched using the corresponding list so that the broadcast signal is received.

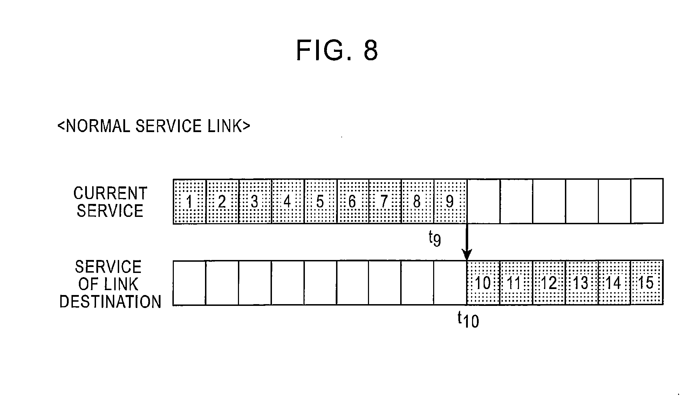

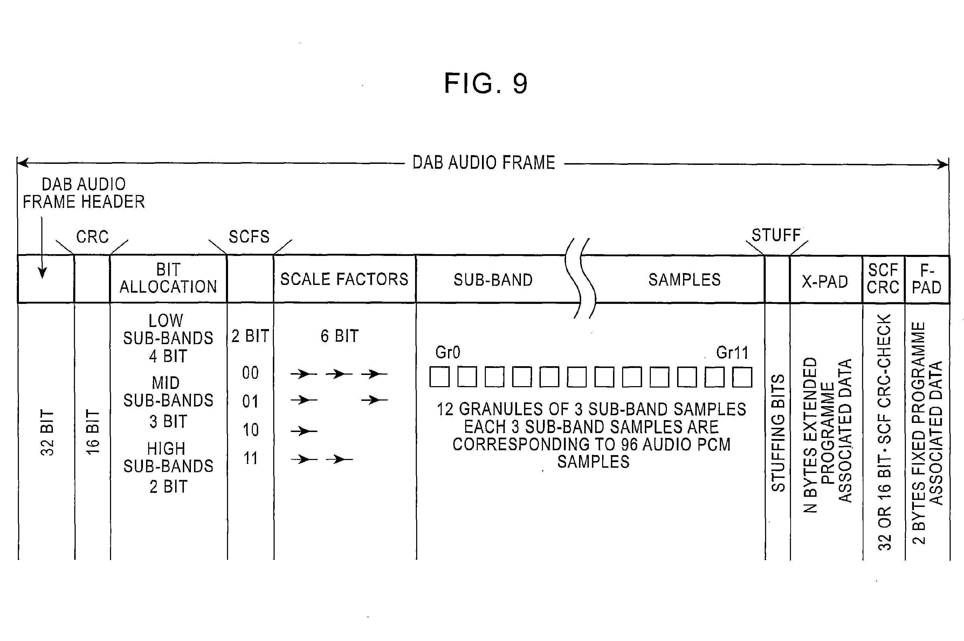

Fig. 8 is a diagram describing the continuous service-receiving function. Fig. 8 illustrates a case where a bad reception state prevents a receiver from receiving an audio frame 9 of a current service at time t_{9.} In such a case, the service link function causes the receiver to switch the current broadcasting station to a link destination (i.e., an alternative broadcasting station) to keep receiving the same service (i.e., the same program) from a following audio frame 10 from time t₁₀. A first square in Fig. 8 indicates a first audio frame (the same applies to other drawings). ETSI EN 408 defines a format of a DAB audio frame. When audio is sampled at a frequency of 48 KHz, an audio frame is 24 msec long. When audio is sampled at a frequency of 24 KHz, an audio frame is 48 msec long. Fig. 9 is a diagram describing the format of such a DAB audio frame. A receiver executes cyclic redundancy check (CRC) for each frame and determines whether the frame is receivable depending on whether an error is correctable.

A time-shift playback function will now be described.

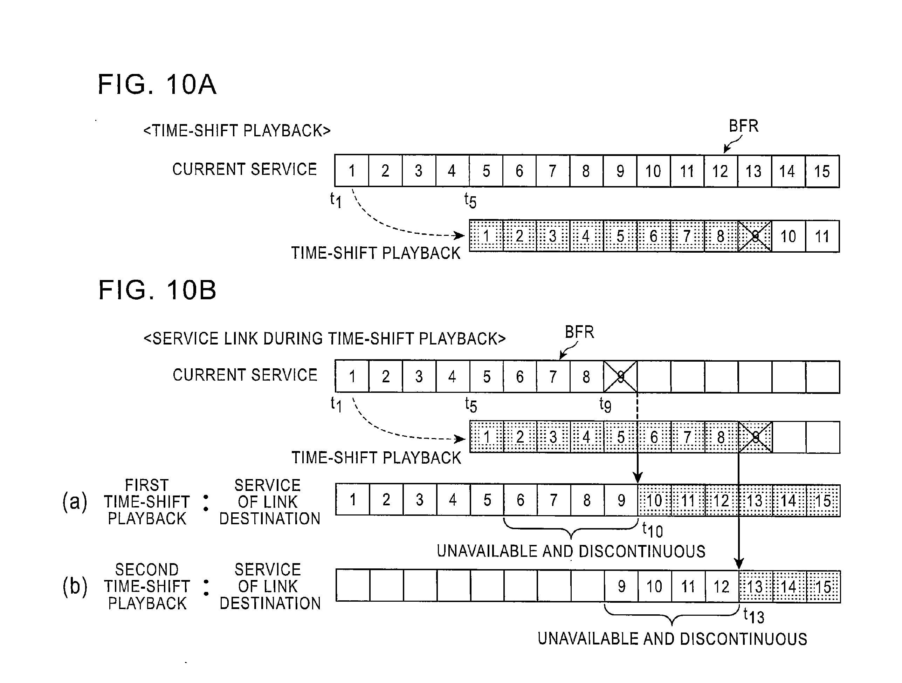

In addition to the function for continuously receiving a service in a bad reception state, a digital broadcasting receiver has a time-shift playback function. The time-shift playback function allows the digital broadcasting receiver to simultaneously record a received digital broadcast signal in a buffer and read out and reproduce the recorded digital broadcast signal after a predetermined time from a recording time point (see Japanese Unexamined Patent Application Publication No. 2008-136103). Fig. 10A is a diagram describing the time-shift playback function. Fig. 10A illustrates a case where the digital broadcasting receiver starts recording following frames in a buffer BFR in response to pause of viewing at time t₁ and then sequentially reads out, from the buffer BFR, the frames starting from the one at the time t₁ in response to resume of viewing at time t₅ to reproduce. The time-shift playback function causes the digital broadcasting receiver to keep recording a broadcast program even if a user temporarily stops viewing the broadcast program because incidents, such as receiving an incoming call during reception of the broadcasting, going through a ticket gate, and creating an email, prevent the user from viewing the broadcast program in real time. Thus, the user can play back and enjoy the broadcast program from the point the user has stopped viewing when the user is ready to view the broadcast program.

A bad reception state may prevent a digital broadcasting receiver from receiving a realtime broadcast program during time-shift playback. In such a case, the digital broadcasting receiver switches a current broadcasting station to an alternative one using the service link function to keep receiving the broadcast program. Fig. 10B is a diagram describing methods for controlling time-shift playback when reception of the realtime broadcast program becomes unavailable during time-shift playback. As in the case of Fig. 10A, the digital broadcasting receiver sequentially reads out, from a buffer BFR, frames starting from view pause time t₁ in response to resume of viewing at time t₅ to execute time-shift playback. In such a state, when the digital broadcasting receiver can no longer receive the current service at time t₉, the digital broadcasting receiver immediately stops the time-shift playback, switches the current broadcasting station to a link destination (i.e., the alternative broadcasting station) at time t₁₀ to keep receiving frames starting from a frame 10 in accordance with a first time-shift playback control method (see (a)). However, the first time-shift playback control method unfortunately misses frames 6-9 and, thus, does not realize continuous viewing of a service.

In contrast, in accordance with a second time-shift playback control method (see (b)), the digital broadcasting receiver does not immediately stop the time-shift playback but stop the time-shift playback after reading out all frames recorded in the buffer BFR. The digital broadcasting receiver then switches the current broadcasting station to the link destination (i.e., the alternative broadcasting station) at time t₁₃ to keep receiving frames starting from a frame 13. However, the second time-shift playback control method unfortunately misses frames 9-12 and, thus, does not realize continuous viewing of the service.

As described above, when reception of a realtime broadcast program becomes unavailable during time-shift playback, continuous reception of the broadcast program is difficult in the related art. Accordingly, a technique is desired that allows users to continuously view a broadcast program even if reception of the realtime broadcast program becomes unavailable during time-shift playback. Japanese Unexamined Patent Application Publication No. 2008-136103 provides a technique for immediately informing users of worsening of a reception sensitivity of a television broadcast program during time-shift playback but does not allow the users to continuously view the program.

### SUMMARY OF THE INVENTION

Accordingly, it is an object of the present invention to allow users to enjoy a continuous broadcast program even if reception of the realtime broadcast program becomes unavailable during time-shift playback.

It is another object of the present invention to allow users to enjoy a continuous broadcast program with one tuner while missing one frame even if reception of the realtime broadcast program becomes unavailable during time-shift playback.

It is still another object of the present invention to allow users to enjoy a continuous broadcast program with two tuners even if reception of the realtime broadcast program becomes unavailable during time-shift playback.

It is a further object of the present invention to allow users to enjoy a continuous broadcast program with two tuners even if reception of the realtime broadcast program from an alternative broadcasting station becomes unavailable.

In accordance with aspects of the present invention, provided are digital broadcasting receivers having a time-shift playback function for reading out and reproducing the digital broadcast signal recorded in the storage section after a predetermined time from the recording while recording a received digital broadcast signal in a storage section and digital broadcasting receiving methods.

A digital broadcasting receiver according to an aspect of the present invention includes: a receiving section configured to receive the digital broadcast signal; a reception-state monitoring section configured to monitor a reception state of the digital broadcast signal; a channel-selection section configured to control the receiving section so that the receiving section receives the digital broadcast signal from a selected broadcasting station and that the receiving section receives the digital broadcast signal from an alternative broadcasting station in response to worsening of the reception state; a first storage section configured to store the digital broadcast signal received from the selected broadcasting station; a second storage section configured to store the digital broadcast signal received from the alternative broadcasting station; and a time-shift playback control section configured to read out, in response to a request for staring a time-shift playback operation, the digital broadcast signal after the predetermined time from the recording while recording the digital broadcast signal received from the selected broadcasting station in the first storage section to execute the time-shift playback operation, configured to keep reading out the digital broadcast signal from the first storage section to execute the playback operation while recording the digital broadcast signal received from the alternative broadcasting station in the second storage section in response to worsening of the reception state during the time-shift playback operation, and configured to read out the digital broadcast signal from the second storage section after completion of reading out of the digital broadcast signal recorded in the first storage section while keeping recording the digital broadcast signal received from the alternative broadcasting station in the second storage section to continue the time-shift playback operation.

When the digital broadcast signals are recorded in the first and second storage sections in units of frames, the digital broadcasting receiver according to the aspect may further include means for storing a position of a frame from which the time-shift playback operation is started. The time-shift playback control section may execute the time-shift playback operation by starting reading out and reproducing the digital broadcast signal from the position of the frame stored in the first storage section in response to the request for starting the time-shift playback operation.

When the digital broadcast signals are recorded in the first and second storage sections in units of frames, the digital broadcasting receiver according to the aspect may further include means for storing information specifying a position of a frame at which the reception state has worsened during the time-shift playback operation. The time-shift playback control section may read out the digital broadcast signal from the first storage section to reach the position of the frame at which the reception state has worsened and then read out the digital broadcast signal from the second storage section.

A digital broadcasting receiver according to another aspect of the present invention includes: a first receiving section configured to receive the digital broadcast signal; a second receiving section configured to receive the digital broadcast signal; a reception-state monitoring section configured to monitor a reception state of the digital broadcast signal; a channel-selection section configured to control the first and second receiving sections so that the first receiving section receives the digital broadcast signal from a selected broadcasting station and the second receiving section receives the digital broadcast signal from an alternative broadcasting station of the selected broadcasting station; a first storage section configured to store the digital broadcast signal received from the selected broadcasting station; a second storage section configured to store the digital broadcast signal received from the alternative broadcasting station; and a time-shift playback control section configured to read out, in response to a request for starting a time-shift playback operation, recorded data of the digital broadcast signal from the first storage section after the predetermined time from the recording while recording the digital broadcast signals received from the selected and alternative broadcasting stations in the first and second storage sections, respectively, to execute the time-shift playback operation, and configured to read out, in response to worsening of the reception state during the time-shift playback operation, recorded data of the digital broadcast signal from the second storage section while keeping recording the digital broadcast signal in the second storage section to continue the time-shift playback operation.

In the digital broadcasting receiver according to the other aspect, the time-shift playback control section may keep recording the digital broadcast signals received from the selected and alternative broadcasting stations in the first and second storage sections, respectively, after the readout-target storage section is switched in response to worsening of the reception state during the time-shift playback operation and may switch the readout-target storage section again to continue the time-shift playback operation when the reception state worsens again.

When the digital broadcast signals are recorded in the first and second storage sections in units of frames, the digital broadcasting receiver according to the other aspect may further include means for storing a position of a frame from which the time-shift playback operation is started. The time-shift playback control section may execute the time-shift playback operation by starting reading out and reproducing the digital broadcast signal from the position of the frame stored in the first storage section in response to the request for starting the time-shift playback operation.

A digital broadcasting receiving method according to still another aspect of the present invention includes the steps of: reading out, in response to a request for starting a time-shift playback operation, recorded digital broadcast signal after a predetermined time from the recording while recording the digital broadcast signal received from a selected broadcasting station in a first storage section to execute the time-shift playback operation; keeping reading out the digital broadcast signal from the first storage section while recording the digital broadcast signal received from an alternative broadcasting station in a second storage section in response to worsening of the reception state during the time-shift playback operation to continue the playback operation; and reading out the digital broadcast signal from the second storage section after completion of reading out of the digital broadcast signal recorded in the first storage section while keeping recording the digital broadcast signal received from the alternative broadcasting station in the second storage section to continue the time-shift playback operation.

When the digital broadcast signals are recorded in the first and second storage sections in units of frames, the digital broadcasting receiving method according to the still another aspect may further include the steps of: storing a position of a frame from which the time-shift playback operation is started; and executing the time-shift playback operation by starting reading out and reproducing the digital broadcast signal from the position of the frame stored in the first storage section in response to the request for starting the time-shift playback operation.

When the digital broadcast signals are recorded in the first and second storage sections in units of frames, the digital broadcasting receiving method according to the still another aspect may further include the steps of: storing information specifying a position of a frame at which the reception state has worsened during the time-shift playback operation; and reading out the digital broadcast signal from the first storage section to reach the position of the frame at which the reception state has worsened and then reading out the digital broadcast signal from the second storage section.

A digital broadcasting receiving method according to a further aspect of the present invention includes the steps of: reading out, in response to a request for starting a time-shift playback operation, recorded data of the digital broadcast signal from a first storage section after the predetermined time from the recording while recording the digital broadcast signal received by the first receiving section from a selected broadcasting station in the first storage section and the digital broadcast signal received by a second receiving section from an alternative broadcasting station in a second storage section to execute the time-shift playback operation; and reading out, in response to worsening of a reception state during the time-shift playback operation, recorded data of the digital broadcast signal from the second storage section while keeping recording the digital broadcast signal in the second storage section to continue the time-shift playback operation.

The digital broadcasting receiving method according to the further aspect may further include the steps of: keeping recording the digital broadcast signals received from the selected and alternative broadcasting stations in the first and second storage sections, respectively, after the readout-target storage section is switched in response to worsening of the reception state during the time-shift playback operation; and switching the readout-target storage section again to continue the time-shift playback operation when the reception state worsens again.

When the digital broadcast signals are recorded in the first and second storage sections in units of frames, the digital broadcasting receiving method according to the further aspect may further include the steps of: storing a position of a frame from which the time-shift playback operation is started; and executing the time-shift playback operation by starting reading out and reproducing the digital broadcast signal from the position of the frame stored in the first storage section in response to the request for starting the time-shift playback operation.

In accordance with the aspects of the present invention, since the number of skipped frames can be suppressed to zero or one even if reception of a realtime broadcast program becomes unavailable during time-shift playback, users can enjoy the continuous broadcast program.

In accordance with the aspects of the present invention, users can enjoy a continuous broadcast program with one receiving section (tuner) while missing one frame even if reception of the realtime broadcast program becomes unavailable during time-shift playback.

In accordance with the aspects of the present invention, users can enjoy a continuous broadcast program without skipping frames with two receiving sections (tuners) even if reception of the realtime broadcast program becomes unavailable during time-shift playback.

In accordance with the aspects of the present invention, users can enjoy a continuous broadcast program without skipping frames with two receiving sections (tuners) by switching between a selected broadcasting station and an alternative broadcasting station based on a reception state even if reception of the realtime broadcast program from one of the broadcasting stations becomes unavailable.

### BRIEF DESCRIPTION OF THE DRAWINGS

Fig. 1 is a diagram illustrating an overview of a method for controlling time-shift playback in a digital broadcasting receiver according to a first embodiment of the present invention;
Fig. 2 is a block diagram of the digital broadcasting receiver according to the first embodiment;
Fig. 3 is a flowchart of processing for controlling time-shift playback according to the first embodiment;
Fig. 4 is a diagram illustrating an overview of a method for controlling time-shift playback in a digital broadcasting receiver including two tuners;
Fig. 5 is a block diagram of the digital broadcasting receiver according to a second embodiment of the present invention;
Fig. 6 is a flowchart of processing for controlling time-shift playback according to the second embodiment;
Fig. 7 is a diagram illustrating a link back function and, more specifically, a diagram illustrating a method for controlling time-shift playback after a change of a buffer from which audio frames are read out;
Fig. 8 is a diagram illustrating a continuous service-receiving function;
Fig. 9 is a diagram illustrating a format of a DAB audio frame; and
Figs. 10A and 10B are diagrams illustrating problems in methods for controlling time-shift playback according to the related art.

### DESCRIPTION OF THE PREFERRED EMBODIMENTS

A first embodiment will now be described.

An overview of a method for controlling time-shift playback according to the first embodiment is discussed.

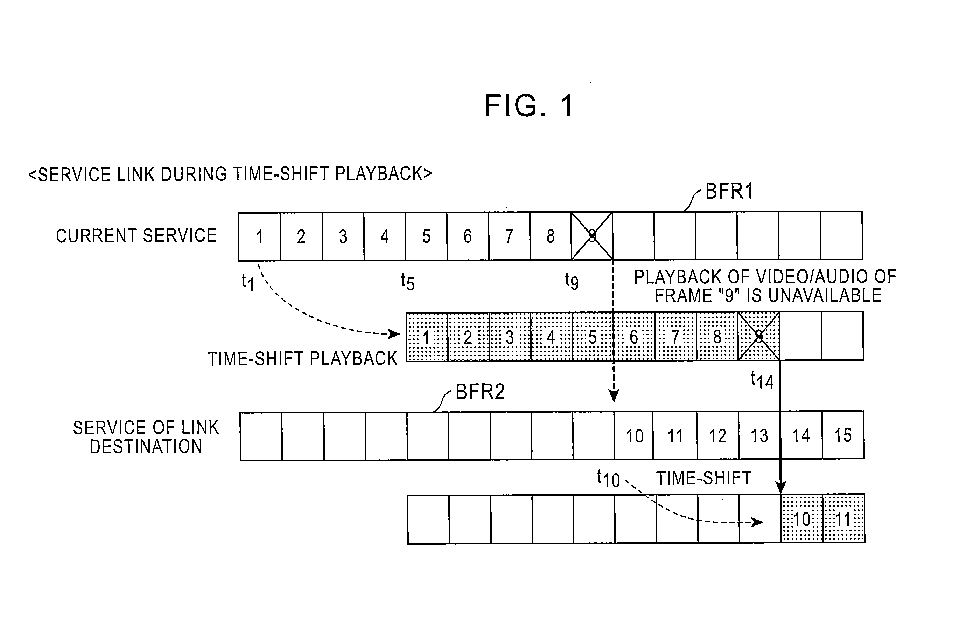

Fig. 1 is a diagram illustrating the overview of the method for controlling time-shift playback in a digital broadcasting receiver according to the first embodiment. A first buffer BFR1 stores a digital broadcast signal received from a selected broadcasting station. A second buffer BFR2 stores a digital broadcast signal received from an alternative broadcasting station of the selected broadcasting station.

While the digital broadcasting receiver is outputting a digital broadcast signal received from the selected broadcasting station, a user temporarily stops viewing at time t₁ to instruct time-shift playback later. In response to the user's action, a time-shift control unit (not illustrated) records each frame of the digital broadcast signal received from the selected broadcasting station in the first buffer BFR1 sequentially from a frame 1 to execute time-shift playback later. The user is ready for viewing at time t₅ and instructs the digital broadcasting receiver to execute time-shift playback. In response to the instruction, the time-shift control unit reads out and reproduces the frames (i.e., the frames 1, 2, ...) from the first buffer BFR1 while keeping recording frames (i.e., frames 5, 6, ...) of the digital broadcast signal received from the selected broadcasting station. In an example illustrated in Fig. 1, the time-shift control unit sequentially reads out the frames from the first buffer BFR1 after a time corresponding to four frames (hereinafter, referred to as a four-frame time) from a recording time point to execute time-shift playback.

Thereafter, the time-shift control unit records frames in the first buffer BFR1 and reads out the frames from the first buffer BFR1 after the four-frame time in parallel to continue time-shift playback. When a reception state worsens during time-shift playback and an error is detected at time t₉ in a frame (e.g., a frame 9) sent from the selected broadcasting station, the time-shift control unit switches the broadcasting station to a link-destination broadcasting station (i.e., an alternative broadcasting station). The time-shift control unit then starts recording frames (i.e., frames 10, 11, ...) of a digital broadcast signal received from the alternative broadcasting station in the second buffer BFR2 at time t₁₀ and keeps reading out the frames from the first buffer BFR1 to continue time-shift playback. After reading out all of the frames recorded in the first buffer BFR1, the time-shift control unit starts reading out the frames (i.e., the frames 10, 11, ...) from a frame storage starting position of the second buffer BFR2 at time t₁₄ to continue time-shift playback. Thereafter, the time-shift control unit sequentially records frames (i.e., frames 14, 15, ...) of the digital broadcast signal received from the alternative broadcasting station in the second buffer BFR2 in parallel with reading out of the recorded frames from the second buffer BFR2.

Since time-shift playback can be continued from the frame 10 with such a process although the frame 9 at time t₉ is missed, the digital broadcasting receiver can almost continuously execute time-shift playback of a program.

As a method for controlling switching between the first buffer BFR1 and the second buffer BFR2, following first and second methods can be adopted.

The first switching control method includes steps of:
1) recording all frames up to a frame (e.g., the frame 9 in Fig. 1) having a cyclic redundancy check (CRC) error in the first buffer BFR1; 2) executing CRC check on each frame read out from the first buffer BFR1 during time-shift playback; and 3) switching the frame readout buffer to the second buffer BFR2 after a CRC error is detected (at time t₁₄ in Fig. 1).

The second switching control method includes steps: 1) storing information on a position of a frame (e.g., the frame 9 in Fig. 1) having the CRC error; 2) reading out frames up to the stored frame position from the first buffer BFR1 during time-shift playback; and 3) switching the frame readout buffer to the second buffer BFR2 thereafter. In embodiments to be described below, a description will be given for a case of adopting the second switching control method.

A digital broadcasting receiver according to the first embodiment will now be described.

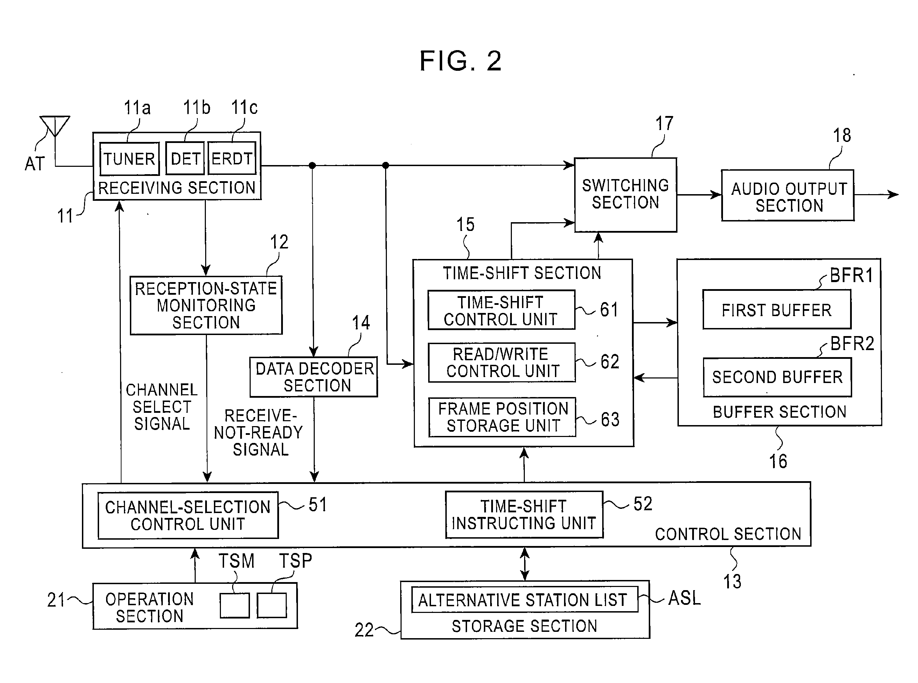

Fig. 2 is a block diagram of the digital broadcasting receiver according to the first embodiment of the present invention.

The digital broadcasting receiver includes a receiving section 11. The receiving section 11 includes a tuner 11a, an orthogonal frequency division multiplexing (OFDM) demodulating unit (DET) 11b, an error detecting and correcting unit (ERDT) 11c. The tuner 11a outputs a radio broadcast signal of a reception frequency matching a broadcasting station (channel) selected by a user from a digital radio broadcasting wave received with an antenna AT. The OFDM demodulating unit 11b executes OFDM demodulation on the broadcast signal received with the tuner 11a to output a transport stream TS. The error detecting and correcting unit 11c detects and corrects an error caused during transmission.

A reception-state monitoring section 12 detects an uncorrectable error (unreceivable state) and informs a control section 13 of occurrence of the uncorrectable error. The control section 13 controls the digital broadcasting receiver and includes controls units related to the present invention, such as a channel-selection control unit 51 and a time-shift instructing unit 52. The channel-selection control unit 51 controls the tuner 11a so that the tuner 11a receives and outputs a radio broadcast signal from a broadcasting station (channel) selected by the user. The channel-selection control unit 51 also creates an alternative station list ASL using service link information and controls switching of the broadcasting station using the alternative station list when the reception state worsens. Upon being requested to start storing the broadcast signal for time-shift playback and to start time-shift playback by an operation section 21, the time-shift instructing unit 52 informs a time-shift section 15 of the requests. A data decoder section 14 decodes the data stream output from the receiving section 11 to extract the service link information. The data decoder section 14 then inputs the service link information to the control section 13. The channel-selection control unit 51 creates the alternative station list ASL using the service link information and stores the created alternative station list ASL in a storage section 22.

The time-shift section 15 includes a time-shift control unit 61 for executing a time-shift control operation described in the overview illustrated in Fig. 1, a read/write control unit 62 for controlling writing and reading of audio frames in and from a first buffer BFR1 and a second buffer BFR2 of a buffer section 16, and a frame position storage unit 63 for storing position information, such as information on a position of the first frame stored for time-shift playback and a position of an error detected frame.

The buffer section 16 includes the first buffer BFR1 and the second buffer BFR2 for storing audio frames received from the selected and alternative broadcasting stations at the time of time-shift playback, respectively. A switching section 17 selects and outputs an audio data stream (i.e., audio frames) output from the receiving section 11 at the time of normal reception. At the time of time-shift playback, the switching section 17 selects and outputs audio frames read out from the first buffer BFR1 or the second buffer BFR2 by the time-shift section 15.

An audio output section 18 converts the audio frames into an audio signal and executes predetermined audio processing to output the processed audio signal from a speaker, not illustrated. The operation section 21 includes various keys, such as a key TSM for instructing starting of storage for time-shift playback and a key TSP for instructing starting of time-shift playback.

Processing for controlling time-shift playback will now be described.

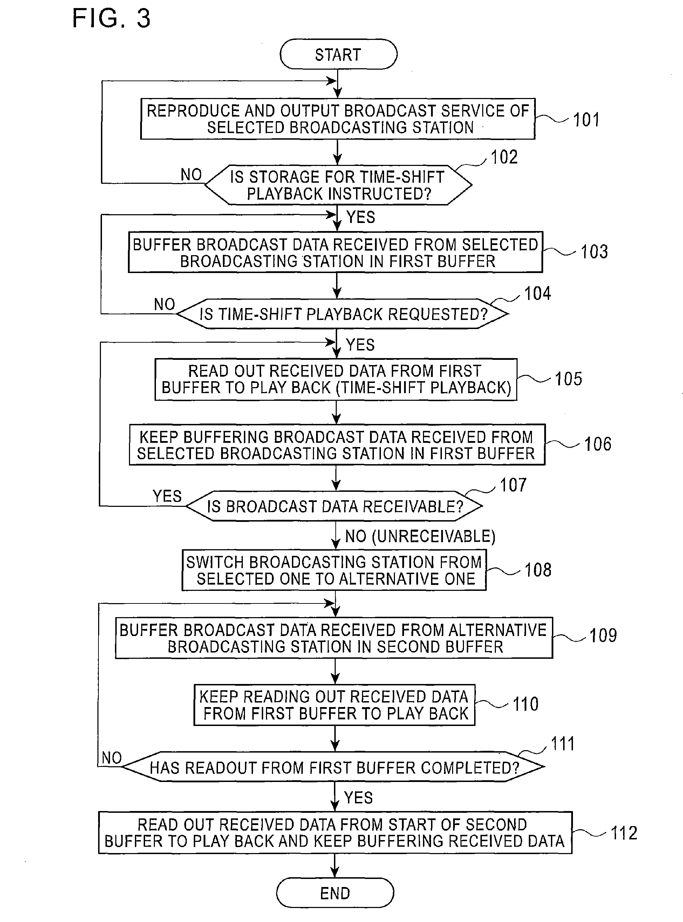

Fig. 3 is a flowchart of the processing for controlling time-shift playback according to the first embodiment. The processing will be described with reference to Fig. 1.

The digital broadcasting receiver receives a broadcast service from a broadcasting station selected by a user (hereinafter, referred to as a selected broadcasting station) with the receiving section 11 and outputs radio broadcast audio through the switching section 17 and the audio output section 18 (STEP 101). In such a state, the time-shift instructing unit 52 of the control section 13 monitors whether starting of storage for time-shift playback is requested by the operation section 21 (STEP 102). In response to the request for starting the storage for time-shift playback, the time-shift instructing unit 52 informs the time-shift control unit 61 of the request (at time t₁ in Fig. 1). In response to the request, the time-shift control unit 61 buffers broadcast data (audio frames) received from the selected broadcasting station in the first buffer BFR1 thereafter (STEP 103). The time-shift control unit 61 also stores, in the frame position storage unit 63, information on a position of the first frame (e.g., the frame 1 in Fig. 1) having been recorded in the first buffer BFR1 for time-shift playback.

The time-shift instructing unit 52 then monitors whether starting of time-shift playback is requested by the operation section 21 (STEP 104). In response to the request for starting time-shift playback, the time-shift instructing unit 52 informs the time-shift control unit 61 of the request (at time t₅ in Fig. 1). The time-shift control unit 61 then reads out the frames (e.g., the frames 1, 2, ... in Fig. 1) from the first buffer BFR1 with reference to the first frame position information stored in the frame position storage unit 63 and outputs the reproduced frames through the switching section 17 and the audio output section 18 (STEP 105). The time-shift control unit 61 also keeps recording audio frames (e.g., the frames 5, 6, ...) of the digital broadcast signal received from the selected broadcasting station in the first buffer BFR1 (STEP 106).

During the time-shift playback, the reception-state monitoring section 12 is monitoring whether an audio frame is receivable by detecting an uncorrectable error (STEP 107). Upon detecting the uncorrectable error (at time t₉ in Fig. 1), the reception-state monitoring section 12 informs the control section 13 of occurrence of the uncorrectable error. The time-shift instructing unit 52 of the control section 13 immediately informs the time-shift control unit 61 of the occurrence of the uncorrectable error. Additionally, the channel-selection control unit 51 switches the broadcasting station from the currently receiving one to an alternative broadcasting station with reference to the alternative station list ASL. Thereafter, the receiving section 11 outputs an audio data stream (i.e., audio frames) received from the alternative broadcasting station (STEP 108).

Upon being informed of the occurrence of the uncorrectable error, the time-shift control unit 61 stores information on a position of the error-detected audio frame in the frame position storage unit 63. Thereafter (e.g., after time t₁₀ in Fig. 1), the time-shift control unit 61 buffers audio frames (e.g., frames 10, 11, ...) received from the alternative broadcasting station in the second buffer BFR2 (STEP 109). In parallel with buffering, the time-shift control unit 61 keeps reading out the audio frames from the first buffer BFR1 to continue time-shift playback (STEP 110).

In such a state, the time-shift control unit 61 monitors whether all of the frames recorded in the first buffer BFR1 have been read out. That is, the time-shift control unit 61 monitors whether readout of the audio frame indicated by the frame position information stored in the frame position storage unit 63 from the first buffer BFR1 has completed (STEP 111). In response to the completion of readout, the time-shift control unit 61 reads out the frames (e.g., the frames 10, 11, ... in Fig. 1) from the frame storage starting position of the second buffer BFR2 thereafter (after time t₁₄ in Fig. 1) to continue time-shift playback. At the same time, the time-shift control unit 61 sequentially records audio frames (e.g., frames 14, 15, ...) of the digital broadcast signal received from the alternative broadcasting station in the second buffer BFR2 (STEP 112).

Although the error-detected frame (e.g., the frame 9 in Fig. 1) is not reproduced, the time-shift playback can be continued from the following frame in accordance with the first embodiment. Thus, time-shift playback of a program can be executed almost continuously.

A second embodiment will now be described.

An overview of a method for controlling time-shift playback according to the second embodiment is discussed.

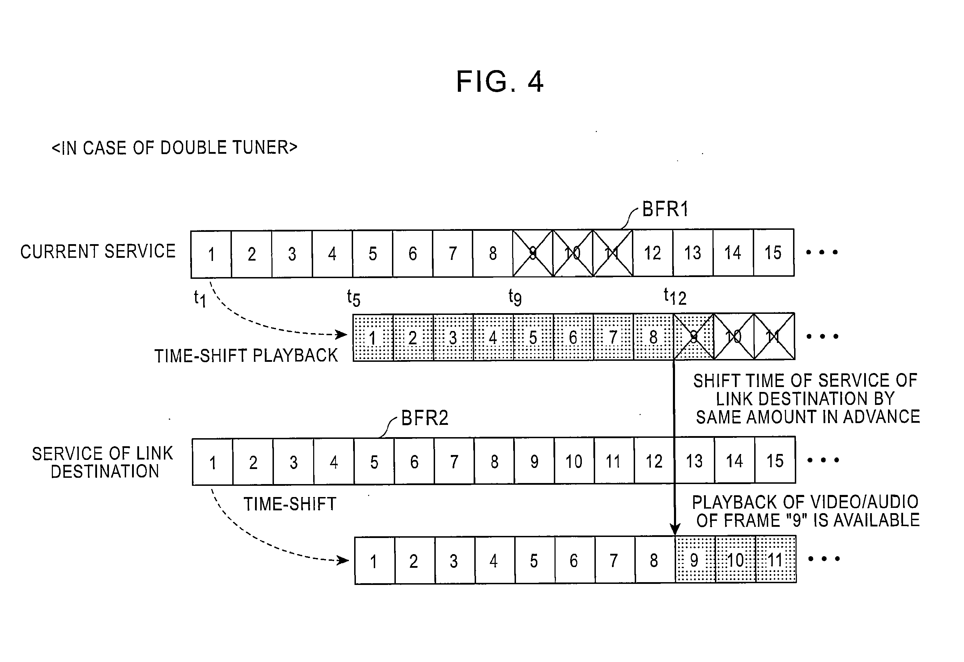

Although Fig. 1 illustrates the overview of the digital broadcasting receiver according to the first embodiment that includes one tuner, Fig. 4 illustrates an overview of a method for controlling time-shift playback in a digital broadcasting receiver according to the second embodiment that includes two tuners.

Referring to Fig. 4, a first buffer BFR1 stores a digital broadcast signal received by a first tuner from a selected broadcasting station, whereas a second buffer BFR2 stores a digital broadcast signal received by a second tuner from an alternative broadcasting station of the selected broadcasting station.

While the digital broadcasting receiver is outputting a digital broadcast signal received by the first tuner from the selected broadcasting station, a user temporarily stops viewing at time t₁ to instruct time-shift playback later. In response to the user's action, a time-shift control unit (not illustrated) records each frame of the digital broadcast signal received from the selected broadcasting station in the first buffer BFR1 sequentially from a frame 1 to execute time-shift playback later. At the same time, the time-shift control unit records each frame of the digital broadcast signal received from the alternative broadcasting station in the second buffer BFR2 sequentially from the frame 1. The user is ready for viewing at time t₅ and instructs the digital broadcasting receiver to execute time-shift playback. In response to the instruction, the time-shift control unit reads out the frames (i.e., the frames 1, 2, ...) from the first buffer BFR1 after a predetermined time (e.g., a four-frame time in Fig. 4) from a recording time point to execute playback (time-shift playback). In parallel with the time-shift playback, the time-shift control unit keeps recording frames of the digital broadcast signals received by the first and second tuners from the selected and alternative broadcasting stations in the first and second buffers BFR1 and BFR2, respectively.

Thereafter, the time-shift control unit records frames in the first and second buffers BFR1 and BFR2 and reads out the frames from the first buffer BFR1 after the four-frame time in parallel to continue time-shift playback. When a reception state worsens during time-shift playback and an error is detected at time t₉ in a frame (e.g., a frame 9) sent from the selected broadcasting station, the time-shift control unit stores a position of the error-detected frame.

Thereafter, the time-shift control unit records frames in the first and second buffers BFR1 and BFR2 and reads out the frames from the first buffer BFR1 after the four-frame time in parallel to continue time-shift playback. If the frame read position of the first buffer BFR1 reaches the position of the error-detected frame (e.g., the frame 9), the time-shift control unit immediately switches the buffer to the second buffer BFR2 and reads out the frames from the position of the error-detected frame. As a result, the frames 9, 10, ... are read out from the second buffer BFR2 thereafter and the time-shift playback is continued. Here, the frames are recorded in the first and second buffers BFR1 and BFR2 in parallel regardless of whether an error occurs or not.

In this way, the digital broadcasting receiver can continuously play back a program even if a broadcasting station is switched in response to detection of an error during time-shift playback.

A digital broadcasting receiver according to the second embodiment will now be described.

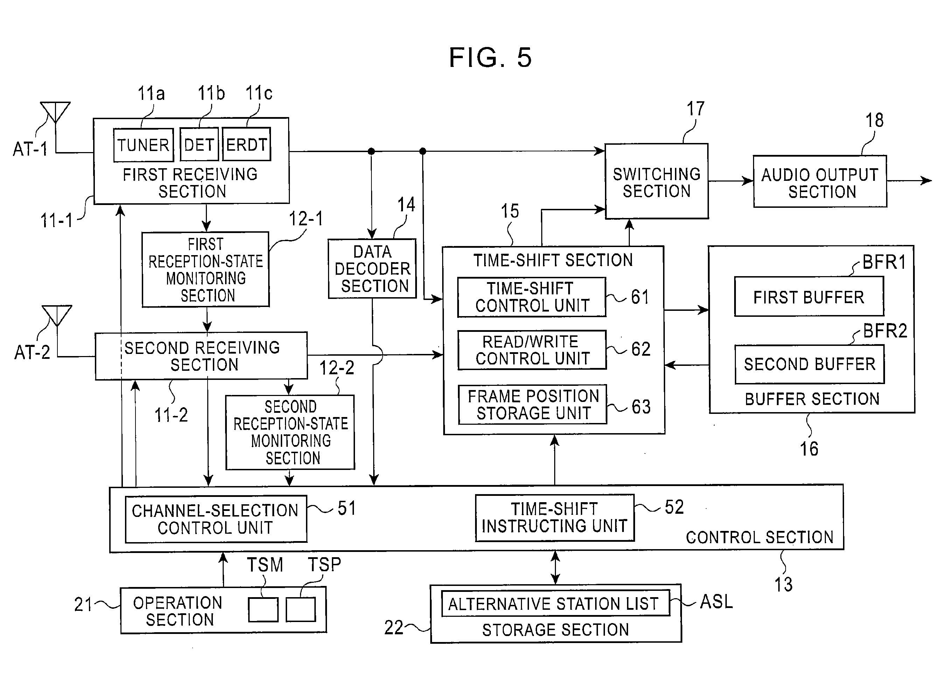

Fig. 5 is a block diagram of the digital broadcasting receiver according to the second embodiment of the present invention. In Fig. 5, like reference characters designate the same or similar sections or units as those illustrated in Fig. 2. A difference is that the digital broadcasting receiver according to the second embodiment includes first and second receiving sections 11-1 and 11-2 for receiving broadcast signals from selected and alternative broadcasting stations and first and second reception-state monitoring sections 12-1 and 12-2 for monitoring reception states of the selected and alternative broadcasting stations, respectively. Audio data streams are input to a time-shift section 15 from the first and second receiving sections 11-1 and 11-2, respectively. The first and second receiving sections 11-1 and 11-2 have the same configuration. More specifically, as in the case of the first embodiment, each of the first and second receiving sections 11-1 and 11-2 has a tuner 11a, an OFDM demodulating unit (DET) 11b, and an error detecting and correcting unit (ERDT) 11c.

Processing for controlling time-shift playback will now be described.

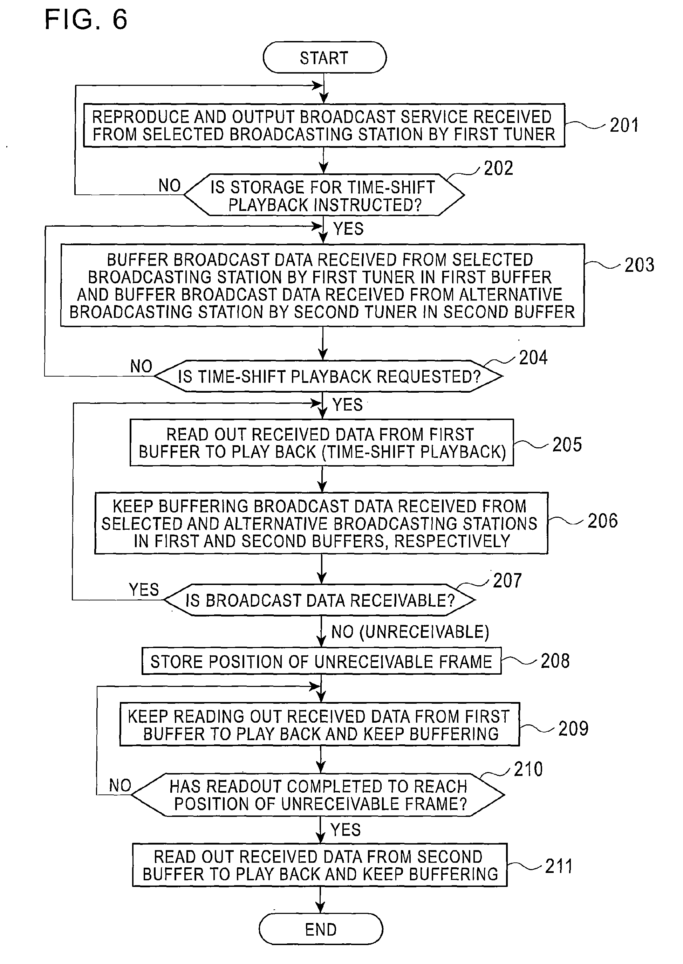

Fig. 6 is a flowchart of the processing for controlling time-shift playback according to the second embodiment. The processing will be described with reference to Fig. 4.

The digital broadcasting receiver receives a broadcast service from a broadcasting station selected by a user (hereinafter, referred to as a selected broadcasting station) with the first receiving section 11-1 and outputs radio broadcast audio through a switching section 17 and an audio output section 18 (STEP 201). In such a state, a time-shift instructing unit 52 of a control section 13 monitors whether starting of storage for time-shift playback is requested by an operation section 21 (STEP 202). In response to the request for starting the storage for time-shift playback, the time-shift instructing unit 52 informs a time-shift control unit 61 of the request (at time t₁ in Fig. 4). Additionally, a channel-selection control unit 51 causes the second receiving section 11-2 to start receiving a broadcast service from an alternative broadcasting station. Reception of the broadcast services from the selected and alternative broadcasting stations may be executed simultaneously in parallel.

Thereafter, the time-shift control unit 61 buffers broadcast data (audio frames) received by the first and second receiving sections 11-1 and 11-2 from the selected and alternative broadcasting stations in the first and second buffers BFR1 and BFR2, respectively (STEP 203). At this time, the time-shift control unit 61 stores information of a position of the first frame (e.g., the frame 1 in Fig. 4) having been recorded in the first buffer BFR1 for time-shift playback in a frame position storage unit 63.

The time-shift instructing unit 52 then monitors whether starting of time-shift playback is requested by the operation section 21 (STEP 204). In response to the request for starting time-shift playback, the time-shift instructing unit 52 informs the time-shift control unit 61 of the request (at time t₅ in Fig. 4). The time-shift control unit 61 then reads out the frames (e.g., the frames 1, 2, ... in Fig. 4) from the first buffer BFR1 with reference to the first frame position information stored in the frame position storage unit 63 to reproduce the frames (STEP 205). The time-shift control unit 61 also keeps recording audio frames (e.g., frames 5, 6, ...) of the digital broadcast signals received from the selected and alternative broadcasting stations in the first and second buffers BFR1 and BFR2, respectively (STEP 206).

During the time-shift playback, the first reception-state monitoring section 12-1 is monitoring whether the audio frame are receivable by detecting an uncorrectable error (STEP 207). Upon detecting the uncorrectable error (at time t₉ in Fig. 4), the first reception-state monitoring section 12-1 informs the control section 13 of occurrence of the uncorrectable error. The time-shift instructing unit 52 of the control section 13 immediately informs the time-shift control unit 61 of the occurrence of the uncorrectable error. The time-shift control unit 61, in turn, stores information on a position of the error-detected audio frame in the frame position storage unit 63 (STEP 208).

Thereafter (e.g., after time t₉ in Fig. 4), the time-shift control unit 61 buffers audio frames (e.g., frames 9, 10, 11, ...) received from the selected and alternative broadcasting stations in the first and second buffers BFR1 and BFR2, respectively. In parallel with buffering, the time-shift control unit 61 keeps reading out the audio frames from the first buffer BFR1 to continue time-shift playback (STEP 209).

In such a state, the time-shift control unit 61 monitors whether all of the error-free frames recorded in the first buffer BFR1 have been read out. That is, the time-shift control unit 61 monitors whether readout of the audio frame (e.g., the frame 8) immediately in front of the error-detected frame indicated by the frame position information stored in the frame position storage unit 63 from the first buffer BFR1 has completed (STEP 210). In response to the completion of reading out of the preceding frame (at time t₁₂ in Fig. 4), the time-shift control unit 61 reads out the audio frames (e.g., the frames 9, 10, ... in Fig. 4) from the position of the error-detected frame of the second buffer BFR2 to continue time-shift playback. At the same time, the time-shift control unit 61 sequentially records audio frames (e.g., frames 13, 14, ...) received from the selected and alternative broadcasting stations in the first and second buffers BFR1 and BFR2, respectively (STEP 211).

As described above, the digital broadcasting receiver reads out the error-free audio frames (e.g., the frames 1-8) immediately in front of the error-detected unreceivable frame from the first buffer BFR1 and then reads out, from the second buffer BFR2, the error-free frames received from the alternative station (e.g., the frames 9, 10, ...) starting from a frame corresponding to the error-detected frame. Accordingly, the digital broadcasting receiver can execute time-shift playback without audio skipping.

In accordance with the second embodiment, time-shift playback of frames of a program can be executed continuously, i.e., without audio skipping, even if an error is detected during time-shift playback.

A method for controlling time-shift playback with a link back function will now be described.

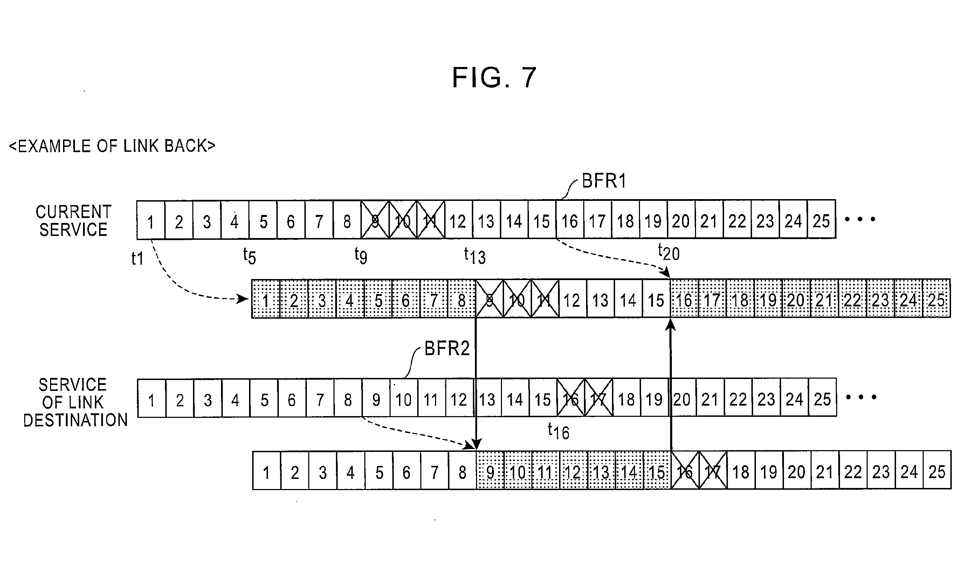

Fig. 7 is a diagram illustrating the link back function. More specifically, Fig. 7 illustrates a method for controlling time-shift playback after switching, at time t₁₂ in Fig. 4, the buffer from which audio frames are read out.

After switching, in response to worsening of the reception state during time-shift playback, the buffer from which the audio frames are read out (e.g., after time t₁₂ in Fig. 7), the time-shift control unit 61 keeps recording audio frames (e.g., frames 13, 14, ...) received from the selected and alternative broadcasting stations in the first and second buffers BFR1 and BFR2, respectively. In response to detection of an error caused by a bad reception state of the alternative broadcasting station corresponding to the second buffer BFR2 from which the audio frames are read out (at time t₁₆ in Fig. 7), the time-shift control unit 61 stores information on a position of the error-detected audio frame in the frame position storage unit 63.

Thereafter, the time-shift control unit 61 keeps buffering audio frames (e.g., frames 16, 17, ...) received from the selected and alternative broadcasting stations in the first and second buffers BFR1 and BFR2, respectively. In parallel with buffering, the time-shift control unit 61 keeps reading out the audio frames from the second buffer BFR2 to continue time-shift playback. In such a state, the time-shift control unit 61 monitors whether all of the error-free frames recorded in the second buffer BFR2 have been read out. That is, the time-shift control unit 61 monitors whether readout of the audio frame (e.g., the frame 15) immediately in front of the error-detected frame indicated by the frame position information stored in the frame position storage unit 63 from the second buffer BFR2 has completed. In response to the completion of reading out of the audio frame immediately in front of the error-detected frame (at time t₂₀ in Fig. 7), the time-shift control unit 61 switches the buffer and reads out the audio frames (e.g., the frames 16, 17, ... in Fig. 7) from the position of a frame corresponding to the error-detected frame in the first buffer BFR1 to continue time-shift playback. At the same time, the time-shift control unit 61 buffers audio frames (e.g., frames 20, 21, ...) received from the selected and alternative broadcasting stations in the first and second buffers BFR1 and BFR2, respectively. Thereafter, the similar time-shift playback controlling operation is executed.

The selected broadcasting station and the alternative broadcasting station are alternately switched based on the reception state in accordance with the above-described method for controlling time-shift playback with the link back function so that users can enjoy a continuous broadcast program.

Although a case of applying the present invention to digital radio receivers has been described above, the present invention can obviously applied to digital television receivers in the similar manner.

## Claims

1. A digital broadcasting receiver having a time-shift playback function for reading out and reproducing the digital broadcast signal recorded in the storage section after a predetermined time from the recording while recording a received digital broadcast signal in a storage section, the digital broadcasting receiver comprising:
a first receiving section (11, 11-1) configured to receive the digital broadcast signal;
at least one reception-state monitoring section (12, 12-1, 12-2) configured to monitor a reception state of the digital broadcast signal;
a channel-selection section (51) configured to control the first receiving section (11, 11-1) so that the first receiving section (11, 11-1) receives the digital broadcast signal from a selected broadcasting station and that the first receiving section (11, 11-1) receives the digital broadcast signal from an alternative broadcasting station in response to worsening of the reception state;
a first storage section (BFR1) configured to store the digital broadcast signal received from the selected broadcasting station;
a second storage section (BFR2) configured to store the digital broadcast signal received from the alternative broadcasting station; and
a time-shift playback control section (61) configured to selectively read out, in response to a request for starting a time-shift playback operation, the digital broadcast signal after the predetermined time from the recording stored in the first storage section (BFR1) or second storage section (BFR2), while recording the digital broadcast signal received from the selected broadcasting station in the first storage section (BFR1) or second storage section (BFR2) to execute the time-shift playback operation.

2. The digital broadcasting receiver according to Claim 1, wherein the time-shift playback control section (61) is further configured to keep reading out the digital broadcast signal from the first storage section (BFR1) to execute the playback operation while recording the digital broadcast signal received from the alternative broadcasting station in the second storage section (BFR2) in response to worsening of the reception state during the time-shift playback operation, and the time-shift playback control section (61) being configured to read out the digital broadcast signal from the second storage section (BFR2) after completion of reading out of the digital broadcast signal recorded in the first storage section (BFR1) while keeping recording the digital broadcast signal received from the alternative broadcasting station in the second storage section (BFR2) to continue the time-shift playback operation.

3. The digital broadcasting receiver according to Claim 1 or 2, the digital broadcast signals being recorded in the first and second storage sections (BFR1, BFR2) in units of frames, the digital broadcasting receiver further comprising:
means (63) for storing a position of a frame from which the time-shift playback operation is started, wherein
the time-shift playback control section (61) executes the time-shift playback operation by starting reading out and reproducing the digital broadcast signal from the position of the frame stored in the first storage section (BFR1) in response to the request for starting the time-shift playback operation.

4. The digital broadcasting receiver according to any of Claims 1 to 3, the digital broadcast signals being recorded in the first and second storage sections (BFR1, BFR2) in units of frames, the digital broadcasting receiver further comprising:
means (63) for storing information specifying a position of a frame at which the reception state has worsened during the time-shift playback operation, wherein
the time-shift playback control section (61) reads out the digital broadcast signal from the first storage section (BFR1) to reach the position of the frame at which the reception state has worsened and then reads out the digital broadcast signal from the second storage section (BFR2).

5. The digital broadcasting receiver according to any of Claims 1 to 4, further comprising:
a second receiving section (11-2) configured to receive the digital broadcast signal;
wherein the channel-selection section (51) is configured to control the first and second receiving sections (11-1, 11-2) so that the first receiving section (11-1) receives the digital broadcast signal from a selected broadcasting station and the second receiving section (11-2) receives the digital broadcast signal from an alternative broadcasting station of the selected broadcasting station; and
the time-shift playback control section (61) is configured to read out, in response to a request for starting a time-shift playback operation, recorded data of the digital broadcast signal from the first storage section (BFR1) after the predetermined time from the recording while recording the digital broadcast signals received from the selected and alternative broadcasting stations in the first and second storage sections (BFR1, BFR2), respectively, to execute the time-shift playback operation, and the time-shift playback control section (61) being configured to read out, in response to worsening of the reception state during the time-shift playback operation, recorded data of the digital broadcast signal from the second storage section (BFR2) while keeping recording the digital broadcast signal in the second storage section (BFR2) to continue the time-shift playback operation.

6. The digital broadcasting receiver according to Claim 5, wherein the time-shift playback control section (61) is configured to keep recording the digital broadcast signals received from the selected and alternative broadcasting stations in the first and second storage sections (BFR1, BFR2), respectively, after the readout-target storage section is switched in response to worsening of the reception state during the time-shift playback operation and the time-shift playback control section (61) switches the readout-target storage section again to continue the time-shift playback operation when the reception state worsens again.

7. A digital broadcasting receiving method for a digital broadcasting receiver having a time-shift playback function for reading out and reproducing the digital broadcast signal recorded in the storage section after a predetermined time from the recording while recording a received digital broadcast signal in a storage section, the digital broadcasting receiving method comprising the steps of:
reading out, in response to a request for starting a time-shift playback operation, the recorded digital broadcast signal after a predetermined time from the recording while recording the digital broadcast signal received from a selected broadcasting station in a first storage section (BFR1) to execute the time-shift playback operation (105, 106);
keeping reading out the digital broadcast signal from the first storage section (BFR1) while recording the digital broadcast signal received from an alternative broadcasting station in a second storage section (BFR2) in response to worsening of the reception state during the time-shift playback operation to continue the playback operation (108, 109, 110); and
reading out the digital broadcast signal from the second storage section (BFR2) after completion of reading out of the digital broadcast signal recorded in the first storage section (BFR1) while keeping recording the digital broadcast signal received from the alternative broadcasting station in the second storage section (BFR2) to continue the time-shift playback operation (112).

8. The digital broadcasting receiving method according to Claim 7, the digital broadcast signals being recorded in the first and second storage sections (BFR1, BFR2) in units of frames, the digital broadcasting receiving method further comprising the steps of:
storing a position of a frame from which the time-shift playback operation is started; and
executing the time-shift playback operation by starting reading out and reproducing the digital broadcast signal from the position of the frame stored in the first storage section (BFR1) in response to the request for starting the time-shift playback operation.

9. The digital broadcasting receiving method according to Claim 7 or 8, the digital broadcast signals being recorded in the first and second storage sections (BFR1, BFR2) in units of frames, the digital broadcasting receiving method further comprising the steps of:
storing information specifying a position of a frame at which the reception state has worsened during the time-shift playback operation; and
reading out the digital broadcast signal from the first storage section (BFR1) to reach the position of the frame at which the reception state has worsened and then reading out the digital broadcast signal from the second storage section (BFR2).

10. A digital broadcasting receiving method for a digital broadcasting receiver having a time-shift playback function for reading out and reproducing the digital broadcast signal recorded in the storage section after a predetermined time from the recording while recording a received digital broadcast signal in a storage section, the digital broadcasting receiving method comprising the steps of:
reading out, in response to a request for starting a time-shift playback operation, recorded data of the digital broadcast signal from a first storage section (BFR1) after the predetermined time from the recording while recording the digital broadcast signal received by a first receiving section (11-1) from a selected broadcasting station in the first storage section (BFR1) and the digital broadcast signal received by a second receiving (11-2) section from an alternative broadcasting station in a second storage section (BFR2) to execute the time-shift playback operation (205, 206); and
reading out, in response to worsening of a reception state during the time-shift playback operation, recorded data of the digital broadcast signal from the second storage section (BFR2) while keeping recording the digital broadcast signal in the second storage section (BFR2) to continue the time-shift playback operation (211).

11. The digital broadcasting receiving method according to Claim 10, further comprising the steps of:
keeping recording the digital broadcast signals received from the selected and alternative broadcasting stations in the first and second storage sections (BFR1, BFR2), respectively, after the readout-target storage section is switched in response to worsening of the reception state during the time-shift playback operation; and
switching the readout-target storage section again to continue the time-shift playback operation when the reception state worsens again.

12. The digital broadcasting receiving method according to Claim 10 or 11, the digital broadcast signals being recorded in the first and second storage sections (BFR1, BFR2) in units of frames, the digital broadcasting receiving method further comprising the steps of:
storing a position of a frame from which the time-shift playback operation is started; and
executing the time-shift playback operation by starting reading out and reproducing the digital broadcast signal from the position of the frame stored in the first storage section (BFR1) in response to the request for starting the time-shift playback operation.
